# EUROPÄISCHE PATENTSCHRIFT

(11) **EP 0 663 938 B1**
(45) Veröffentlichungstag und Bekanntmachung des Hinweises auf die Patenterteilung: **26.03.1997**
(21) Anmeldenummer: 93921865.7
(22) Anmeldetag: 28.09.1993
(51) Int. Cl.: C08L 93/04, C09J 157/00

(54) **KOLOPHONIUMLÖSUNG**
COLOPHONIUM SOLUTION
SOLUTION DE COLOPHANE

(30) Priorität: 07.10.1992 DE 4233734
(43) Veröffentlichungstag der Anmeldung: 26.07.1995
(73) Patentinhaber: Henkel Kommanditgesellschaft auf Aktien, 40191 Düsseldorf (DE)
(72) Erfinder: TAMCKE, Thomas, D-40593 Düsseldorf (DE); URBATH, Hartmut, D-42389 Wuppertal (DE); TAMM, Horst, D-41748 Viersen (DE); WINDHÖVEL, Udo, D-40789 Monheim (DE); WENZEL, Udo, D-42489 Wülfrath (DE); ZSCHÄBITZ, Kirsten, D-40597 Düsseldorf (DE)
(86) Internationale Anmeldenummer: EP9302635
(87) Internationale Veröffentlichungsnummer: WO9407957

(56) Entgegenhaltungen:
- EP-A- 0 276 691
- US-A- 4 654 388
- DATABASE WPI Week 8844, Derwent Publications Ltd., London, GB; AN 88-312303 & JP,A,63 230 776 (TOYO INK MFG) 27. September 1988
- DATABASE WPI Week 8706, Derwent Publications Ltd., London, GB; AN 87-038959 & JP,A,61 293 278 (MITSUI TOATSU CHEM) 24. Dezember 1986
- DATABASE WPI Week 8844, Derwent Publications Ltd., London, GB; AN 88-312303 & JP-A-63 230 776
- DATABASE WPI Week 8706, Derwent Publications Ltd., London, GB; AN 87-038959 & JP-A-61 293 278

## Beschreibung

Die Erfindung betrifft eine Harzlösung und ihre Verwendung zur Herstellung von Farben, Lacken und Klebstoffen sowie damit hergestellte Klebstoffe auf Basis wäßriger Dispersionen von Vinylpolymeren.

Harze werden bekanntlich unter anderem zur Herstellung von Lacken, Farben, Papier, Pflegemitteln, Dichtungsmassen, Beschichtungsmassen und Klebstoffen verwendet. Sie dienen dazu, die Klebrigkeit der Basispolymeren zu verbessern, d.h. die Anfangshaftung nach kurzem leichtem Druck zu erhöhen. Neben der Klebrigkeit beeinflussen die Harze aber auch die Glasübergangstemperatur und die Viskosität. Die geringe Viskosität ermöglicht Rezepturen mit höheren Feststoffgehalten. Dadurch wird wiederum die Trocknungs- bzw. Abbindezeit verringert.

Aus produktions- und anwendungstechnischen Gründen wird zweckmäßigerweise nicht das Harz selbst, sondern seine Lösung in organischen Lösungsmitteln verwendet. So wird in der deutschen Offenlegungsschrift 23 01 497 die klebrigmachende Komponente in geringen Mengen von nicht-polaren organischen Lösungsmitteln, z.B. Toluol, Methylenchlorid und Xylol gelöst. Als klebrigmachende Komponente werden Kolophonium und dessen Derivatisierungsprodukte genannt. Die Harzlösung wird zur Herstellung eines Kunstharz-Dispersions-Klebstoffes verwendet. Der Klebstoff dient zum Verkleben von Fußbodenbelägen.

In der EP 0 221 461 A2 wird ein Fußbodenbelags-Klebstoff auf Basis wäßriger Polymerdispersionen beschrieben, der neben einem Copolymerisat aus Vinylmonomeren und einen Weichmacher auf Basis von Polypropylenglykolalkylphenol sowie Füllstoffen und Entschäumern auch ein in Toluol gelöstes Balsamharz enthält. Der Toluol-Gehalt ist mit ca. 7 % zwar deutlich niedriger als in den ebenfalls bekannten gelösten Harz- oder Kunstharzklebstoffen mit ca. 15 bis 30 % an organischen Lösungsmitteln wie Methanol, Ethanol, Ethylacetat, Toluol, Benzin und anderen Kohlenwasserstoffen, aber besser wäre es, der Klebstoff würde überhaupt keine aromatischen Kohlenwasserstoffe enthalten.

Aromatische Lösungsmittel wie Toluol und Xylol sind ideal, um Kolophoniumharze in Klebstoffdispersionen einzubringen. Ihr Vorteil liegt in der guten Lösekraft, ihrem Anquellvermögen für die eingesetzten Bindemittel und der daraus resultierenden hohen Klebrigkeit, ihrer günstigen Verdunstungscharakteristik und ihrem günstigen Preis. Nachteile ergeben sich aus dem penetranten Geruch, der bei der Applikation vom Verarbeiter, z.B. beim vollflächigen Verkleben von Fußbodenbelägen wahrgenommen wird, und insbesondere durch die möglicherweise gesundheitsschädigende Wirkung. So wird Toluol nach der MAK-Werte-Liste 1991 in die Schwangerschaftsgruppe B eingestuft aufgrund seiner wahrscheinlich fruchtschädigenden Wirkung. Für Xylol steht der Nachweis noch aus.

Die Herstellung sog. lösungsmittelfreier Dispersionsklebstoffe ist prinzipiell bekannt und wird in ihrer Art im U.S. Patent No. 4,654,388 beschrieben. Anstelle niedrig siedender Lösungsmittel werden zur Lösung und Einarbeitung der klebrigmachenden Harze Hochsieder wie Glykolether und -ester eingesetzt.

Die Schwerflüchtigkeit dieser hochsiedenden Flüssigkeiten hat jedoch den Nachteil, daß die damit hergestellten Klebstoffe langsamer abbinden als solche, in denen Niedrigsieder wie Toluol oder Xylol eingesetzt werden. Durch dieses Phänomen wird der Einsatz lösungsmittelfreier Dispersionsklebstoffe limitiert.

Die Filmverfestigungsgeschwindigkeit des Klebstoffes kann nicht Schritt halten mit der Rückstellkraft der zu klebenden Materialien. Störrische Bodenbeläge oder Wandbeläge richten sich daher an den Kopfenden oder Nähten nach und nach wieder auf.

Es galt daher, ein Lösungsmittel für das Kolophoniumharz zu finden, das die Nachteile von aromatischen Kohlenwasserstoffen, insbesondere bezüglich Geruch und Gefährlichkeit nicht hat, wohl aber deren positive Eigenschaften in produktionstechnischer und anwendungstechnischer Hinsicht.

Die erfindungsgemäße Lösung ist den Patentansprüchen zu entnehmen.

Sie basiert in erster Linie auf der Entdeckung, daß eine geringe Menge von an sich relativ hochsiedenden Diethylenglykol- oder Propylenglykolethern oder -estern die Lösekraft von aliphatischen Kohlenwasserstoffen erheblich verstärkt, die Viskosität der Lösungen verringert und die Ablüftungscharakteristik verbessert. So wird die Viskosität der Harzlösung so stark verringert, daß sogar äußerst schwache Lösungsmittel wie Isoparaffine zugesetzt werden können, wodurch ein sehr niedriges Geruchsniveau ermöglicht wird. Die Ablüftungscharakteristik wird in der Hinsicht verbessert, daß Harz lösungen in geeigneten Mischungen aus den genannten Glykolethern und -acetaten und aliphatischenen Kohlenwasserstoffen schneller ablüften als Harzlösungen in den reinen Lösungsmitteln. Verstärkung der Lösekraft bedeutet, daß sich Harz lösungen mit hohem Festkörpergehalt herstellen lassen, die bei Raumtemperatur eine ausreichende Fließfähigkeit besitzen und die Formulierung lösungsmittelarmer Dispersionsklebstoffe ermöglichen.

Die erfindungsgemäße Harzlösung enthält 25 bis 5 Gew.-% an Alkanen mit 6 bis 10 C-Atomen, 5 bis 25 Gew.-% an Propandiol-mono-ethern oder -carboxylaten mit insgesamt 4 bis 12 C-Atomen und 60 bis 90 Gew.-% des Kolophoniumharzes.

Unter den anspruchsgemäßen Alkanen sind flüssige gesättigte aliphatische Kohlenwasserstoffe der allgemeinen Formel CₙH₂ₙ₊₂ und Cycloalkane der allgemeinen Formel CₙH₂ₙ mit n = 6 bis 10 zu verstehen. Vorzugsweise sind sie verzweigt (Isoalkane) und/oder besitzen 7 bis 10 C-Atome. Sie sind im wesentlichen frei von funktionellen Gruppen. Konkrete Beispiele für die anspruchsgemäßen Alkane sind: Heptan, Octan, Nonan sowie deren technische Isomerengemische.

Die erfindungsgemäßen Diethylenglykol- oder Propandiol-mono-ether oder -carboxylate haben die allgemeine Formel R'-O-X-R, wobei R'gleich H oder CH₃CO, X gleich C₃H₆-O oder CH₂CH₂ und R ein Kohlenwassrstoffrest mit 1 bis 4 C-Atomen ist, der im wesentlichen keine funktionelle Gruppe enthält. Vorzugsweise wird jedoch ein Diethylenglykol- oder Propandiol-mono-ether eingesetzt, und zwar insbesondere ein Alkylether mit insgesamt 4 bis 7 C-Atomen. Von den Propandiolen wird das 1,2-Propandiol bevorzugt. Konkrete Beispiele für die anspruchsgemäßen Diethylenglykol und Propylenglykolmonoether-Derivate sind: Methyldiglykol, 1-Methoxy-2-propanol, 1-Ethoxy-2-propanol. Sie können auch im Gemisch eingesetzt werden.

Das anspruchsgemäße Kolophoniumharz kann nativ oder aber ein Kolophonium-Derivat sein. Von den Derivatisierungsmöglichkeiten Hydrierung, Disproportionierung, Salzbildung, Dimerisierung, Addition von ungesättigten Verbindungen wie Maleinsäure wird die Veresterung bevorzugt. Dabei sollen Alkohole mit 1 bis 5 C-Atomen eingesetzt werden. Hinsichtlich der Herkunft wird das Kolophoniumharz bevorzugt, das als Destillationsrückstand von Terpentinöl erhalten wird, also das Balsamharz. Es kann aber auch ein Wurzel harz oder ein Tallharz, sowie Abmischungen der Harze mit Harzestern verwendet werden (Harz, Glykol und aliphatisches Kohlenwasserstoff).

Bevorzugt werden Harze, deren Erweichungspunkt zwischen 15 und 95 °C (ring & ball) liegt und die eine Säurezahl zwischen 140 und 180 besitzen. Bevorzugte Harzester besitzen eine Säurezahl von 5 bis 20 und sind bei Raumtemperatur hochviskose Flüssigkeiten oder bis zu 120 °C schmelzende Festkörper.

Die Konzentration der 3 Komponenten kann in weiten Bereichen variieren und hängt im wesentlichen von deren Anwendung ab. Im Falle ihrer Verwendung zur Herstellung von wäßrigen Klebstoffdispersionen beträgt die Konzentration zweckmäßigerweise: 75 Harz/18,5 Isoparaffin/6,5 1-Methoxy-2-propanol.

Die erfindungsgemäße Lösung von Kolophonium in Alkanen und Diethylenglykol- bzw. Propandiol-mono-ether eignet sich zur Herstellung von Farben, Lacken, Papier, Pflegemittel, Dichtungsmassen, Beschichtungen und insbesondere Klebstoffen.

Gegenstand der Erfindung sind auch Klebstoffe auf der Basis von wäßrigen Dispersionen von Vinylpolymeren, die mit einer anspruchsgemäßen Harzlösung hergestellt wurden. Die erfindungsgemäße Harzlösung bewirkt trotz völliger Wasserlöslichkeit der niederen Glykolether in den wäßrigen Dispersionen Verdunstungszahlen von 5 bis 20, vorzugsweise 8 bis 12, wie sie für die meisten Verarbeitungen bei vollflächiger Beschichtung gewünscht sind und auch bei aromatenhaltigen Dispersionen vorkommen. Unter der Verdunstungszahl versteht man den Quotienten aus der Verdunstungszeit der zu prüfenden Flüssigkeit und derjenigen von Diethylether als Vergleichsflüssigkeit. Die Prüftemperatur beträgt 20 ± 2 °C und die relative Luftfeuchtigkeit 55 ± 5 %.

Bei den kolloidal oder grobdispersen Vinylpolymeren handelt es sich um Verbindungen der allgemeinen Formel -(CH₂ - CR₁R₂ -)ₙ, in der R₁ für Wasserstoff oder CH₃ steht und R₂ für H, R₃, Phenyl, OR₃, O - CO - R₃ und CO - OR₃ bedeuten, wobei R₃ ein Alkylrest mit 1 bis ... C-Atomen ist. Neben Homopolymerisaten mit obiger Struktur werden vor allem Copolymerisate mit obigen Struktureinheiten eingesetzt.
Konkrete Monomere zur Herstellung der anspruchsgemäßen Vinylpolymere sind:
a) Ester der Acryl- oder Methacrylsäure mit einwertigen Alkoholen mit 1 bis 24 C-Atomen wie Methyl-, Ethyl-, Propyl-, Butyl-, Hexyl-, Cyclohexyl-, 2-Ethylhexyl-, Lauryl-, Stearyl-, Benzyl-, und Phenylethyl-Acrylat bzw. Methacrylat,
b) Olefinen mit 2 bis 8 C-Atomen wie Ethylen, Propylen, Butylen, Butadien, Isopren und Chloropren,
c) vinylaromatische Verbindungen wie Styrol und Vinyltoluol,
d) Vinylether von Alkoholen mit 1 bis 8 C-Atomen wie Vinylmethyl-, Vinylethyl-, Vinylpropyl- oder Vinylbutyl-ether und
e) Vinyl- und Allylester von Carbonsäuren mit 1 bis 24 C-Atomen wie Formiat, Acetat, Propionat, Laurat oder Stearat,
f) Vinylhalogenide, insbesondere Vinylchlorid und Vinylidenchlorid sowie
g) ungesättigte Carbonsäuren und deren Derivate außer den bereits beschriebenen Estern wie Acrylsäure, Methacrylsäure, Fumarsäure, Maleinsäure, Itaconsäure, Crotonsäure sowie deren Amide, Nitrile oder Salze.

Der Anteil der Comonomeren in dem Copolymeren richtet sich nach dem jeweiligen Verwendungszweck. Entsprechende Auswahlregeln sind dem Fachmann geläufig.
Konkrete Homo- oder Copolymere aus diesen Monomeren sind: Acrylsäureester, Styrolacrylate, Acrylatvinylacetat-Copolymere, Ethylenvinylacetat-Copolymere, Acrylatacrylnitril-Copolymere und Ethylenvinylacetatacrylat-Copolymere.

Ihre Herstellung erfolgt ebenfalls auf bekannte Weise in Form einer Emulsionspolymerisation.
Das Gewichtsverhältnis von Vinylpolymeren : Harz in der wäßrigen Dispersion richtet sich nach dem Verwendungszweck. Es beträgt im allgemeinen zwischen 20 : 1 bis 0,3 : 1. Für Klebstoffe beträgt es vorzugsweise 3 : 1 bis 0,5 : 1.

Je nach Verwendungszweck enthält die wäßrige Dispersion der Vinylpolymeren, die die erfindungsgemäße Harzlösung enthalten noch weitere Zusatzstoffe wie Wachse, Füllstoffe, Stabilisatoren, Pigmente, Weichmacher, Entschäumer, Viskositätsregler und Konservierungsmittel.

Ein Dispersionsklebstoff enthält im allgemeinen
8 bis 55 Gew.-% an Vinylpolymerisat,
5 bis 20 Gew.-% Kolophoniumharz,
0,5 bis 2 Gew.-% Propylenglykol-mono-ester bzw. -ether,
1 bis 8 Gew.-% Alkane,
20 bis 55 Gew.-% Füllstoffe,
0,5 bis 5 Gew.-% Emulgatoren und
0,5 bis 5 Gew.-% an Stabilisatoren.
Der Rest ist Wasser.

Die beanspruchten Dispersionsklebstoffe eignen sich besonders zum Verkleben von Bodenbelägen. Darunter sind Materialien aus Holz, Textilien oder elastischen Materialien wie PVC, CV, Gummi, Linoleum oder Kork zu verstehen, die auf den Estrich gelegt werden und der Raumausgestaltung, der Isolierung oder dem Schutz des Fußbodens dienen. Vorteilhafterweise werden harzreiche Klebstoffdispersionen für textile Bodenbeläge, vor allem Teppiche, eingesetzt und harzärmere Dispersionsklebstoffe für Kunststoff-Bodenbeläge wie PVC-Fliesen.
Das gute Lösevermögen des neuen Lösemittelgemisches und die günstige Ablüftecharakteristik verleihen dem neuen Klebstoff ausreichende Anfangsklebrigkeit bei sonst gewohnten anwendungstechnischen Eigenschaften.

Der beanspruchte Dispersionsklebstoff wird im allgemeinen folgendermaßen hergestellt:
1. Vorlegen einer Polymerdispersion
2. Zugabe von Emulgatoren und sonstigen Additiven
3. Zugabe der Füllstoffe
4. Zugabe der Harzlösung aus Harz, Glykol und Alkanen
5. Einstellung der Viskosität mit Wasser

Die Erfindung wird nun anhand eines Beispieles im einzelnen erläutert:

### 1. Herstellung, Charakterisierung und Vergleich der erfindungsgemäßen Harzlösung mit aromatischen und aliphatischen Harz lösungen

Die Herstellung erfolgt in einem beheizbaren Rührkessel mit geeignetem Rührwerk, z. B. Dissolver.

Als Vorlage werden eingebracht: 75 Gew.-Teile Balsamharz, 18,5 Gew.-Teile Isoparaffin mit 7 bis 9 C-Atomen und 6,5 Gew.-Teile 1-Methoxy-2-propanol. Unter langsamer Erwärmung und hoher Rührenergie wird das Harz in Lösung gebracht und dann auf Raumtemperatur abgekühlt. Die entstehende Harzlösung ist klar und homogen. Sie kann wie übliche aromatenhaltige Harzlösung bei Raumtemperatur verarbeitet werden. Im Vergleich zu aromatenhaltigen Lösungen ist der Geruch deutlich reduziert. Im Vergleich zu rein aliphatischen Lösungen auf Isoparaffinbasis ist die Viskosität der erfindungsgemäßen Harzlösung signifikant niedriger, so daß hohe Harzkonzentrationen möglich sind. Dies ermöglicht die Herstellung lösemittelarmer und geruchsarmer Klebstoffe.

Vergleich der Viskositäten [Brookfield, Spindel 3, 20 U/min] von 75 gew.-%igen Harz lösungen

| Lösemittel | Viskosität (bei 23 °C) |
|---|---|
| Toluol | 700 mPas |
| C₇-C₉-Isoparaffin | 4600 mPas |
| C₇-C₉-Isoparaffin + 1-Methoxy-2-propanol (18,5 % + 6,5 %) | 1800 mPas |

### 2. Herstellung, Charakterisierung und Vergleich eines erfindungsgemäßen Dispersionsklebstoffes mit einem aromatenhaltigen Klebstoff

Die Herstellung erfolgt in einem Rührkessel mit Balkenrührwerk. Dabei werden 30 Gew.-Teile einer Acrylat-Copolymerisatdispersion vorgelegt und mit folgenden Additiven versetzt: Konservierungsmittel 0,05 Gew.-Teile, anionischer Emulgator 1,1 Gew.-Teile, Stabilisator 0,9 Gew.-Teile, Verdicker 0,5 Gew.-Teile, verschiedene Glykole und Glykolether 2 Gew.-Teile, Ammoniak 0,1 Gew.-Teile. Anschließend werden 19,5 Gew.-Teile erfindungsgemäßer Harzlösungen einemulgiert. Nach einer Rührzeit von 10 Minuten wird ein calzitischer Füllstoff (45 Gew.-Teile) zugegen und solange dispergiert bis alle Agglomerate zerstört sind und der Klebstoff im Aufstrich homogen ist. Die Endviskosität wird mit Wasser eingestellt.

Der fertige Klebstoff hat eine Viskosität von ca. 18000 mPas und läßt sich leicht mit einem Zahnspachtel verarbeiten. Im Vergleich zu aromatenhaltigen Klebstoffen werden bei üblichen Luftwechselraten keine MAK-Werte überschritten, wie daß bei toluolischen Dispersionsklebstoffen durchaus der Fall sein kann. Der aromatenfreie Klebstoff ist äußerst milde im Geruch und in einer lösemittelarmen Formulierung kaum noch von lösemittelfreien Systeme zu unterscheiden.

In klebetechnischer Hinsicht ist ein solcher Klebstoff allerdings lösemittelfreien Systemen deutlich überlegen. Durch die günstige Ablüftecharakteristik der erfindungsgemäßen Harzlösung können, wie bisher nur mit aromatenhaltigen Klebstoffen, selbst sehr störrische Wand- und vor allem Bodenbeläge verklebt werden.

## Patentansprüche

1. Harzlösung, enthaltend
a) 25 bis 5 Gew.-% an Alkanen mit 6 bis 10 C-Atomen,
b) 5 bis 25 Gew.-% an Diethylenglykol- oder Propandiol-mono-ether oder -carboxylaten mit insgesamt 4 bis 12 C-Atomen und
c) 60 bis 90 Gew.-% eines Kolophoniumharzes,
wobei sich die Konzentration der Komponenten in Gew.-% jeweils auf die Gesamtmenge der Lösung bezieht.

2. Harzlösung nach Anspruch 1, gekennzeichnet durch Isoalkane als Alkane.

3. Harzlösung nach Anspruch 1, gekennzeichnet durch Alkane mit 7 bis 10 C-Atomen.

4. Harzlösung nach Anspruch 1, gekennzeichnet durch Propandiolmono-Alkylether mit insgesamt 4 bis 12 C-Atomen.

5. Harzlösung nach Anspruch 1, gekennzeichnet durch Balsamharz als Kolophoniumharz.

6. Harzlösung nach mindestens einem der Ansprüche 1 bis 5, gekennzeichnet durch folgende Konzentration:
20 bis 12 Gew.-% an Alkanen,
3 bis 8 Gew.-% an Propandiol-mono-ether oder -carboxylat und
70 bis 85 Gew.-% an Kolophoniumharz.

7. Verwendung der Harzlösung nach mindestens einem der Ansprüche 1 bis 6 zur Herstellung von Farben, Lacken und Klebstoffen.

8. Klebstoff auf der Basis von wäßrigen Dispersionen von Vinylpolymeren, enthaltend eine Harzlösung nach mindestens einem der Ansprüche 1 bis 6.

9. Klebstoff nach Anspruch 8, gekennzeichnet durch
8 bis 55 Gew.-% an Vinylpolymerisat,
5 bis 20 Gew.-% Kolophoniumharz,
0,5 bis 2 Gew.-% Propylenglykol-mono-ester bzw. -ether,
1 bis 8 Gew.-% Alkane,
20 bis 55 Gew.-% Füllstoffe,
0,5 bis 5 Gew.-% Emulgatoren und
0,5 bis 5 Gew.-% an Stabilisatoren
wobei sich die Gew.-% auf die genannte Dispersion, einschließlich des restlichen Wassers, bezieht.

10. Verwendung des Klebstoffs nach mindestens einem der Ansprüche 8 und 9 zum Verkleben von Bodenbelägen, insbesondere von Textilien wie Teppichen und Kunststoffen wie PVC-Fliesen.

## Claims

1. A resin solution containing
a) 25 to 5% by weight of alkanes containing 6 to 10 carbon atoms,
b) 5 to 25% by weight of diethylene glycol or propanediol monoethers or carboxylates containing a total of 4 to 12 carbon atoms and
c) 60 to 90% by weight of a colophony resin,
the concentration of the components in % by weight being based on the solution as a whole.

2. A resin solution as claimed in claim 1, characterized by isoalkanes as the alkanes.

3. A resin solution as claimed in claim 1, characterized by alkanes containing 7 to 10 carbon atoms.

4. A resin solution as claimed in claim 1, characterized by propanediol monoalkyl ethers containing a total of 4 to 12 carbon atoms.

5. A resin solution as claimed in claim 1, characterized by balsamic resin as the colophony resin.

6. A resin solution as claimed in at least one of claims 1 to 5, characterized by the following concentration:
20 to 12% by weight of alkanes,
3 to 8% by weight of propanediol monoether or carboxylate and
70 to 85% by weight of colophony resin.

7. The use of the resin solution claimed in at least one of claims 1 to 6 for the production of paints, lacquers and adhesives.

8. An adhesive based on aqueous dispersions of vinyl polymers containing a resin solution according to at least one of claims 1 to 6.

9. An adhesive as claimed in claim 8, characterized by
8 to 55% by weight of vinyl polymer,
5 to 20% by weight of colophony resin,
0.5 to 2% by weight of propylene glycol monoester or ether,
1 to 8% by weight of alkanes,
20 to 55% by weight of fillers,
0.5 to 5% by weight of emulsifiers and
0.5 to 5% by weight of stabilizers,
the percentages by weight being based on the above-mentioned dispersion, including the residual water.

10. The use of the adhesive claimed in at least one of claims 8 and 9 for bonding floor coverings, more especially textiles, such as carpets, and plastics, such as PVC tiles.

## Revendications

1. Solution de résine contenant
a) 25 à 5 % en poids d'alcanes comportant 6 à 10 atomes de C,
b) 5 à 25 % en poids de monoéthers ou de monocarboxylates de diéthylèneglycol ou de propanediol possédant au total 4 à 12 atomes de C, et
c) 60 à 90 % en poids d'une résine de colophane, la concentration des composants en % en poids se rapportant dans chaque cas à la quantité totale de la solution.

2. Solution de résine selon la revendication 1, caractérisée par des isoalcanes comme alcanes.

3. Solution de résine selon la revendication 1, caractérisée par des alcanes comportant 7 à 10 atomes de C.

4. Solution de résine selon la revendication 1, caractérisée par des monoalkyléthers de propanediol comportant au total 4 à 12 atomes de C.

5. Solution de résine selon la revendication 1, caractérisée par de la résine tacamaque comme résine de colophane.

6. Solution de résine selon une des revendications 1 à 5, caractérisée par les concentrations suivantes:
20 à 12 % en poids d'alcanes,
3 à 8 % en poids de monoéther ou de monocarboxylate de propanediol et
70 à 85 % en poids de résine de colophane.

7. Utilisation de la solution de résine selon au moins une des revendications 1 à 6 pour la fabrication de peintures, de vernis et d'adhésifs.

8. Adhésif à base de dispersions aqueuses de polymères vinyliques, contenant une solution de résine selon au moins une des revendications 1 à 6.

9. Adhésif selon la revendication 8, caractérisé par
8 à 55 % en poids de polymère vinylique,
5 à 20 % en poids de résine de colophane,
0,5 à 2 % en poids de monoester ou de monoéther de propylèneglycol,
1 à 8 % en poids d'alcanes,
20 à 55 % en poids de charges,
0,5 à 5 % en poids d'émulsionnants et
0,5 à 5 % en poids de stabilisants
le % en poids se rapportant à la dispersion citée,
y compris l'eau résiduelle.

10. Utilisation de l'adhésif selon au moins une des revendications 8 à 9, pour le collage des revêtements de sol, en particulier en textiles, tels les moquettes et en matières synthétiques, telles les dalles en PVC.
